# EUROPEAN PATENT SPECIFICATION

(11) **EP 3 317 939 B1**
(45) Date of publication and mention of the grant of the patent: **01.01.2020**
(21) Application number: 16818330.9
(22) Date of filing: 14.06.2016
(51) Int. Cl.: H02J 7/00, H01H 1/12, H01H 3/54, H01H 9/20, H01R 13/71, H02S 40/38, F21L 4/00, F21V 23/04, H01R 13/17, H01R 13/213

(54) **MODULAR FUNCTIONAL ELECTRICAL DEVICE WITH A MECHANICAL AND ELECTRICAL CONNECTION**
MODULARE ELEKTRISCHE FUNKTIONSVORRICHTUNG MIT EINER MECHANISCHEN UND ELEKTRISCHEN VERBINDUNG
DISPOSITIF ÉLECTRIQUE FONCTIONNEL MODULAIRE À LIAISON MÉCANIQUE ET CONNEXION ÉLECTRIQUE

(30) Priority: 30.06.2015 SE 1550917
(43) Date of publication of application: 09.05.2018
(73) Proprietor: Sundaya Nordic AB, 431 37 Mölndal (SE)
(72) Inventor: ADEMA, Maurice Raymond, Bogor, Jawa Barat 16810 (ID)
(74) Representative: Kransell & Wennborg KB
(86) International application number: PCT/SE2016/050574
(87) International publication number: WO 2017/003344

(56) References cited:
- WO-A2-2009/064916
- CN-U- 204 316 117
- US-A- 4 408 263
- US-A- 5 590 951
- US-A1- 2014 334 138

## Description

### Field of the Invention

The present invention relates to a modular functional electrical device 5 comprising an energy storage module and a function-providing module.

### Background of the Invention

Everywhere in the world, people use, or desire to use, electrical energy for, for example, illumination, communication, and entertainment (such as 10 television and radio).

Document US 2014/334138 A1 discloses a functional electrical device comprising: an energy storage module including an energy storage device for storing electrical energy, and a male connection portion, said male connection portion comprising a first electrical connector being electrically connected to said energy storage device to allow flow of electrical current from or to the energy storage device via the first electrical connector; and a function-providing module including circuitry for providing an electrical function, and a female connection portion for releasable mechanical and electrical connection to the male connection portion of said energy storage module, said female connection portion comprising a second electrical connector being electrically connected to said circuitry to allow flow of electrical current to or from said circuitry via the second electrical connector, wherein the male connection portion of said energy storage module and the female connection portion of said function-providing module are configured to allow the female connection portion to axially receive the male connection portion and to lock the male connection portion and the female connection portion together through rotation of the energy storage module in relation to the function-providing module; wherein one of the male connection portion and the female connection portion comprises at least one protrusion, wherein one of said first electrical connector comprised in the male connection portion and said second electrical connector comprised in the female connection portion comprises a planar conductor pattern formed by at least a first electrode surface and a second electrode surface electrically separated from the first electrode surface, and the other one of said first electrical connector and said second electrical connector comprises a first and a second spring-loaded connector pin; wherein the male connection portion and the female connection portion are further configured in such a way that: in said first rotational position, axial separation of said energy storage module from said function-providing module is prevented, said first connector pin is in electrical connection with said first electrode surface, and said second connector pin is in electrical connection with said second electrode surface.

In particular in developing countries or remote areas, where adequate infrastructure for generation and supply of electrical energy may not exist, electrical energy may currently be provided by small gensets or similar, in which costly and environmentally unsound fossil fuel is burned to generate electrical energy. Alternatively, or in combination, some functions such as illumination and cooking may be provided through direct combustion of fuel.

There is thus a need for an improved way of providing access to electrical energy.

It would also be desirable to facilitate the use of electrical energy for providing the above-mentioned and other functionalities.

### Summary

In view of above-mentioned and other drawbacks of the prior art, it is an object of the present invention to provide for an improved way of providing access to electrical energy, and in particular to enable more affordable and easy-to-use access to electrical energy.

According to the present invention, it is therefore provided a functional electrical device comprising: an energy storage module including an energy storage device for storing electrical energy, and a male connection portion, the male connection portion comprising a first electrical connector being electrically connected to the energy storage device to allow flow of electrical current from or to the energy storage device via the first electrical connector; and a function-providing module including circuitry for providing an electrical function, and a female connection portion for releasable mechanical and electrical connection to the male connection portion of the energy storage module, the female connection portion comprising a second electrical connector being electrically connected to the circuitry to allow flow of electrical current to or from the circuitry via the second electrical connector, wherein the male connection portion of the energy storage module and the female connection portion of the function-providing module are configured to allow the female connection portion to axially receive the male connection portion and to lock the male connection portion and the female connection portion together through rotation of the energy storage module in relation to the function-providing module; wherein one of the male connection portion and the female connection portion comprises at least one protrusion and the other one of the male connection portion and the female connection portion comprises at least one recess for cooperating with the at least one protrusion to define a first rotational position of the energy storage module in relation to the function-providing module and a second rotational position different from the first rotational position; wherein one of the first electrical connector comprised in the male connection portion and the second electrical connector comprised in the female connection portion comprises a planar conductor pattern formed by at least a first electrode surface and a second electrode surface electrically separated from the first electrode surface, and the other one of the first electrical connector and the second electrical connector comprises a first and a second spring-loaded connector pin; and wherein the male connection portion and the female connection portion are further configured in such a way that: in the first rotational position, axial separation of the energy storage module from the function-providing module is prevented, the first connector pin is in electrical connection with the first electrode surface, and the second connector pin is in electrical connection with the second electrode surface; and in the second rotational position, axial separation of the energy storage module from the function-providing module is prevented, and at least the first connector pin is electrically disconnected from the first electrode surface.

The function-providing module may provide any suitable electrical function, such as converting the electrical energy stored in the energy storage device of the energy storage module to another form of energy, such as light, pressure waves (sound) or mechanical energy. Alternatively, or in combination, the function-providing module may convert another form of energy to electrical energy and provide this electrical energy to the energy storage device. Accordingly, depending on which function-providing module is connected to the energy storage module, the functional electrical device may, for instance, be a lamp, a speaker, a fan, an energy harvester etc.

The energy storage device may be any device capable of storing energy and providing the stored energy in the form of electrical energy. The energy storage device may comprise a rechargeable battery. Alternatively, or in addition, the energy storage device may comprise, for example, a capacitor, a supercapacitor, a flywheel, or a fuel cell.

The present invention is based on the realization that recent advances in energy storage technology can be used to provide for universal access to electrical energy and to thereby make accessible various functions relying on electrical energy.

The present inventor has further realized that modularity, ease-of-use, reliability, and affordability are critical factors for successfully providing for universal access to electrical energy and associated functions.

Through embodiments of the present invention, a modular functional electrical device is provided in which the energy storage module can easily and intuitively be attached to and detached from a function-providing module, so that the energy storage module can be moved between different function-providing modules as desired.

Furthermore, embodiments of the present invention provide for switching the functional electrical device between different functional states (such as on and off) by rotational movement of the energy storage module in relation to the function-providing module, while the energy storage module and the function-providing module are axially locked together. To define the different functional states and to thereby facilitate for the user to switch between the different functional states, one of the male and female connection portions may be provided with at least one recess or protrusion for each relative rotational position defining a functional state. The other one of the male and female connection portions may be provided with at least one protrusion or recess arranged and configured to cooperate with corresponding recesses/protrusions to achieve distinct "stops" in the relative rotation at the desired relative rotational positions.

This will make it easy for the user to feel when the relative rotational position corresponds to a functional state, and may thus obviate the need for dedicated switches or other moving parts for allowing a user to switch the functional electrical device between different functional states. This, in turn, provides for a more reliable and affordable functional electrical device.

Solutions exist where several revolutions of relative rotation translates to axial movement through an ordinary threaded connection to, for example, disconnect a light bulb from a battery. The functional electrical device according to embodiments of the present invention is considerably easier to operate and may provide for further functionality in addition to simple on/off.

For ease of use of the functional electrical device, the male connection portion of the energy storage module and the female connection portion of the function-providing module may advantageously be configured to lock the male connection portion and the female connection portion together through rotation of the energy storage module in relation to the function-providing module by less than 180°, and even more preferably through rotation by less than 90°.

According to various embodiments of the present invention, one of the male connection portion and the female connection portion may comprise at least one protrusion and the other one of the male connection portion and the female connection portion may comprise a first recess for cooperating with the at least one protrusion to define the first rotational position and a second recess for cooperating with the at least one protrusion to define the second rotational position.

The at least one protrusion may advantageously be spring loaded to push into the first recess to define the first rotational position and to push into the second recess to define the second rotational position. In such embodiments, the user will need to provide sufficient torque to work against the spring action of the protrusion when rotating away from the first rotational position or the second rotational position. In this way, the functional electrical device will remain in the present functional state (corresponding to the first or second rotational positions) unless the user provides sufficient torque to push away the spring loaded protrusion.

According to various embodiments, furthermore, the functional electrical device of the present invention may further comprise a recessed guiding track connecting the first recess and the second recess for facilitating movement between the first and second rotational positions. The guiding track may follow a curved path with a radius being equal to the distance between the rotational axis (of the relative rotation locking the energy storage module and the function-providing module together) and the first and second recesses. (The first and second recesses are advantageously provided at the same distance from the rotational axis.)

By providing a guiding track between the first and second recesses, it will be easier to rotate from the first rotational position to the second rotational position and back than in the opposite rotational directions (from the first rotational position and further away from the second rotational position, or from the second rotational position and further away from the first rotational position).

To still provide distinct stops at the first and second relative rotational positions, the maximum depth of the guiding track may be made smaller than the maximum depth of each of the first and second recesses. In other words, the guiding track may advantageously be dimensioned in such a way that force exerted by the protrusion is greater in the guiding track than in the first and second recesses, and smaller in the guiding track than adjacent the first and second recesses (but outside the guiding track and the first and second recesses).

According to various embodiments of the present invention, one of the male connection portion and the female connection portion may comprise at least a first peripheral protrusion and the other one of the male connection portion and the female connection portion may comprise at least a first guiding track for accommodating the first peripheral protrusion and defining a possible relative movement between the male connection portion and the female connection portion, at least comprising rotation around a rotational axis for locking the male connection portion and the female connection portion together.

To guide the user and to provide for intuitive and robust mating of the energy storage module and the function-providing module, the first peripheral protrusion may advantageously be shaped as a triangle with one altitude of the triangle being substantially parallel with the rotational axis.

Advantageously, the vertex (which may be rounded) of the first peripheral protrusion may be pointing (along its altitude) towards "the other" module. Thus, in embodiments where the first peripheral protrusion is comprised in the energy storage module, the vertex may be towards the function-providing module, and *vice versa.*

The first guiding track for receiving and locking the first peripheral protrusion may advantageously comprise a first portion oriented in parallel with the rotational axis, and a second portion oriented perpendicular to the rotational axis.

The first portion of the first guiding track may "open up" to facilitate insertion of the first peripheral recess. Accordingly, the first portion of the first guiding track may exhibit a decreasing width towards the second portion of the first guiding track, to provide for a facilitated mating of the male connection portion and the female connection portion, and to guide the first peripheral protrusion towards the second portion.

The first guiding track may advantageously be configured in such a way that there is a smooth gradual transition from the first portion to the second portion. For instance, at least one edge of the first guiding track may be curved at the transition from the first portion to the second portion.

According to various embodiments, furthermore, the functional electrical device may be provided with two (or more) sets of peripheral protrusions and corresponding guiding tracks to allow insertion of the male connection portion into the female connection portion and locking from several rotational starting positions, for facilitating attachment of the energy storage module to the function-providing module. In such embodiments, the functional electrical device may further be provided with additional recesses/protrusions for defining the different rotational positions for different functional states for each peripheral protrusion/guiding track combination. Moreover, the first and second electrical connectors may, for each peripheral protrusion/guiding track combination, be configured to achieve electrical connection between the first connector pin and the first electrode surface, and between the second connector pin and the second electrode surface in the first rotational position, and to electrically disconnect at least the first connector pin from the first electrode surface in the second rotational position.

In the case of two sets of peripheral protrusion and corresponding guiding tracks, one of the male connection portion and the female connection portion may comprise a second peripheral protrusion opposite the first peripheral protrusion in relation to the rotational axis, and the other one of the male connection portion and the female connection portion may comprise a second guiding track, opposite the first guiding track in relation to the rotational axis, for accommodating the second peripheral protrusion.

In summary, according to various embodiments, the present invention relates to a functional electrical device comprising an energy storage module including a rechargeable battery for storing electrical energy and a male connection portion, and a function-providing module including circuitry for providing an electrical function and a female connection portion for releasable mechanical and electrical connection to the male connection portion. The male connection portion and the female connection portion are configured in such a way that in a first rotational position, axial separation of the energy storage module from the function-providing module is prevented and flow of current from the battery to the circuitry is allowed, and in a second rotational position, axial separation of the energy storage module from the function-providing module is prevented and flow of current from the battery to the circuitry is prevented.

### Brief Description of the Drawings

These and other aspects of the present invention will now be described in more detail, with reference to the appended drawings showing an example embodiment of the invention, wherein:
Figs 1a-b schematically illustrate two example embodiments of the functional electrical device according to the present invention in the form of a lamp and a fan, respectively;
Fig 2 is an exploded and partly cut-out view of the lamp in fig 1a;
Fig 3a is a top view of the female connection portion comprised in the lamp module in fig 2;
Fig 3b is a top view of the male connection portion comprised in the battery module in fig 2;
Fig 4 schematically shows axial insertion of the male connection portion into the female connection portion;
Fig 5 schematically shows a first rotational position in which the lamp head is attached to the battery module and the lamp is on; and
Fig 6 schematically shows a second rotational position in which the lamp head is attached to the battery module and the lamp is off.

### Detailed Description of Example Embodiments

In the present detailed description, various embodiments of the functional electrical device according to the present invention are mainly discussed with reference to a functional electrical device in which the energy storage module comprises a male connection portion and the function-providing module comprises a female connection portion. Furthermore, one example is described in detail in which a particular configuration of the mechanical and electrical interface between the male connection portion and the female connection portion has been specified.

It should be noted that this by no means limits the scope of the present invention, which equally well includes, for example, a functional electrical device in which the energy storage module comprises a female connection portion and the function-providing module comprises a male connection portion. Moreover, one of ordinary skill in the art will realize that the male connection portion may be provided with either a planar electrode pattern or spring-loaded connector pins and *vice versa.*

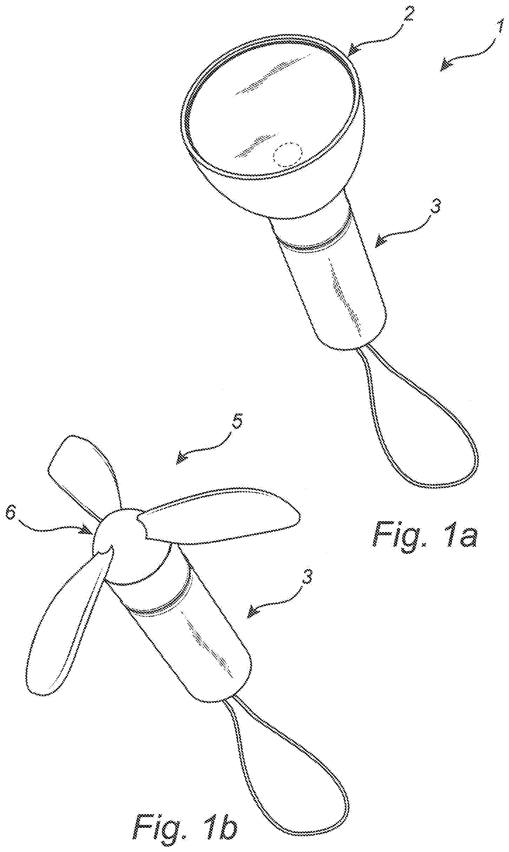

Fig 1a schematically illustrates a first embodiment of the functional electrical device according to the present invention, in the form of a lamp 1. As is indicated in fig 1a, the lamp 1 comprises a function-providing module in the form of lamp module 2, and an energy storage module in the form of battery module 3.

In embodiments of the present invention, the functional electrical device can be separated into the function-providing module and the energy storage module, so that the energy storage module can be connected to another function-providing module to form another functional electrical device providing another electrical function.

Fig 1b schematically illustrates another functional electrical device in the form of a handheld fan 5 comprising a function-providing module in the form of a fan head 6, and the battery module 3.

As an example embodiment of the functional electrical device according to the present invention, the lamp 1 in fig 1a will be described in greater detail below.

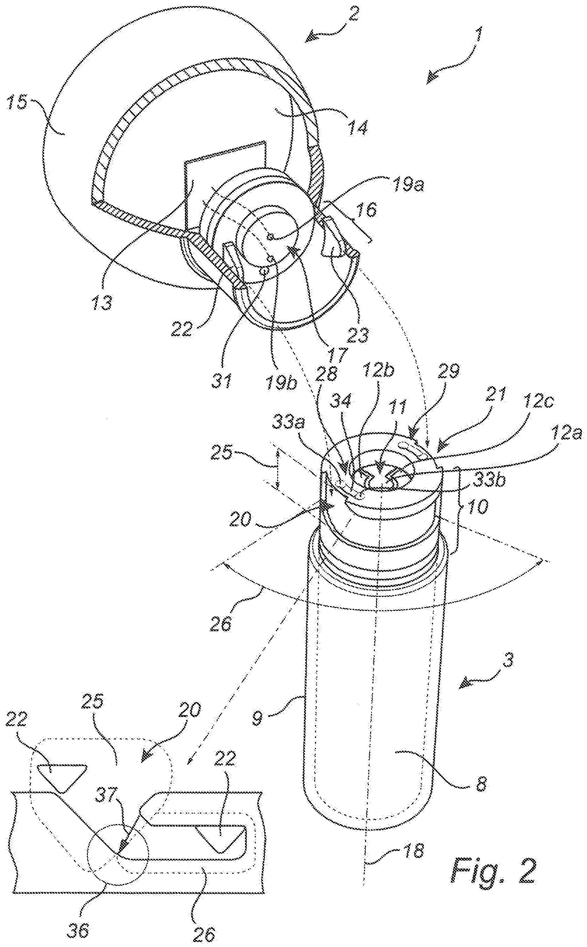

Referring first to fig 2, the lamp 1 is show with the battery module 3 detached from the lamp module 2.

In this view, it can be seen that the battery module 3 comprises a rechargeable battery 8, and a battery housing 9. Integrally formed with the battery housing 9 is a male connection portion 10 comprising a first electrical connector 11. The first electrical connector 11 comprises a recessed planar conductor pattern with a first 12a, a second 12b, and a third 12c electrode surface. In the example conductor pattern configuration of fig 2, the first electrode surface 12a is connected to one pole of the battery 8, while the second 12b and the third 12c electrode surfaces are both connected to the other pole of the battery 8.

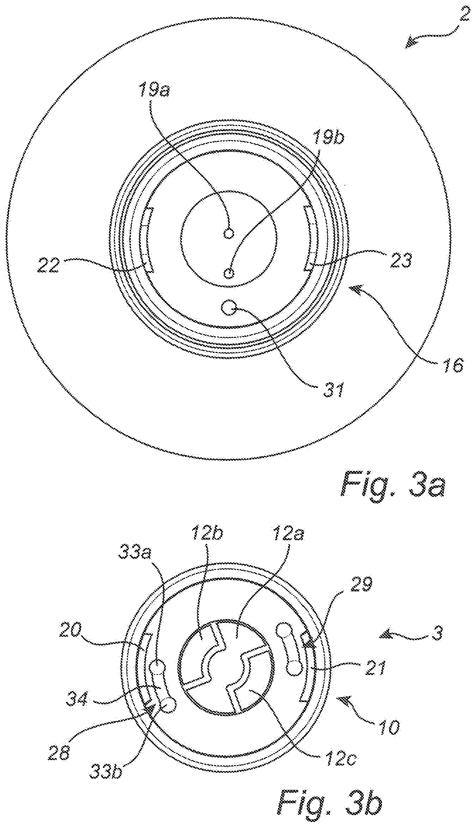

In this context, it should be noted that the electrode surfaces 12a-c are not directly connected to the poles of the battery 8, but that the energy storage module 3 additionally comprises electronic circuitry (not shown in fig 3) performing various functions. Such functions may, for example, include to maintain the current and/or voltage provided by the battery within a predefined range, and to stop transfer of energy from the battery when the state of charge has been reduced to a predefined threshold value.

The lamp module 2 comprises a light-emitting device 13, a reflector 14, and a lamp housing 15. Integrally formed with the lamp housing 15 is a female connection portion 16 comprising a second electrical connector 17. The second electrical connector 17 comprises first 19a and second 19b spring-loaded connection pins, which are connected to the light-source 13.

The male connection portion 10 of the battery module 3 and the female connection portion 16 of the lamp module 2 are configured to allow the female connection portion 16 to axially receive the male connection portion 10 and to lock the male connection portion 10 and the female connection portion 16 together through rotation of the battery module 3 in relation to the lamp module 2 about a rotational axis 18.

To provide this twist-lock functionality, the male connection portion 10 comprises first 20 and second 21 guiding tracks, and the female connection portion 16 comprises first 22 and second 23 peripheral protrusions.

Each of the first 20 and second 21 guiding tracks comprises a first guiding track portion 25 and a second guiding track portion 26 (only indicated with reference numerals for the first guiding track 20 in fig 2). As is schematically shown in fig 2, the first guiding track portion 25 is oriented in parallel with the rotational axis and opens up towards the lamp module 2 to facilitate axial insertion of the first 22 and second 23 peripheral protrusions of the male connection portion 10 into the first 20 and second 21 guiding tracks, respectively. The second guiding track portion 26 extends along a part of the periphery of the male connection portion 10 and is oriented perpendicular to the rotational axis 18 to lock the respective one of the first 22 and second 23 peripheral protrusions, to prevent axial movement of the lamp module 2 in relation to the battery module 3 when the peripheral protrusions have entered the second guiding track portions of their respective guiding tracks.

As is schematically indicated in fig 2, each of the first 22 and second 23 peripheral protrusions is shaped as a triangle with one altitude of the triangle being substantially parallel with the rotational axis 18. This facilitates insertion of the peripheral protrusions into the corresponding guiding tracks. Advantageously, the peripheral protrusions and the corresponding first guiding track portions may be adapted to each other in such a way that sides of the triangular peripheral protrusion facing the first guiding track portion are substantially parallel to the guiding surfaces of the first guiding track portion.

Furthermore, as is shown in greater detail in the enlarged view in fig 3, the above-mentioned first 25 and second 26 guiding track portions are not abruptly connected, but the angle of the first guiding track portion 25 gradually transitions to the angle of the second guiding track portion 26, so that there is a transition zone 36 between the first 25 and second 26 guiding track portions that is curved with a radius of curvature 37 that is sufficiently great to allow the peripheral protrusion 22 to smoothly slide from the first 25 to the second guiding track portion. In the enlarged portion of fig 3, the peripheral protrusion 22 is shown just before insertion into the guiding track 20 and at its end position when the male connection portion 10 and the female connection portion 16 are locked together.

Through the provision of the above-described first 20 and second 21 guiding tracks of the male connection portion 10, and first 22 and second 23 peripheral protrusions of the female connection portion 16, there are two symmetrical relative rotational positions allowing insertion of the male connection portion 10 into the female connection portion 16.

In addition to what has been described above, the male connection portion 10 comprises two sets of rotation guiding structures, in the form of first 28 and second 29 recess arrangements. The female connection portion 16 comprises a corresponding rotation guiding structure, in the form of an axial protrusion 31. The axial protrusion 31 is arranged to interact with either the first 28 recess arrangement or the second 29 recess arrangement depending on how the male connection portion 10 is inserted into the female connection portion 16.

The first 28 and second 29 recess arrangements are identical, and each comprise a first axial recess 33a, a second axial recess 33b, and a recessed guiding track 34 connecting the first 33a and second 33b axial recesses. The first 33a and second 33b axial recesses are deeper than the recessed guiding track 34.

Through the relative positioning and configuration of the electrode surfaces 12a-c, the recess arrangements 28-29, the connector pins 19a-b, the axial protrusion 31, the guiding tracks 20-21, and the peripheral protrusions 22-23, two rotational positions are defined which allow a user to turn the lamp on and off by rotating the battery module 3 in relation to the lamp module 2. This will be described in greater detail below.

Figs 3a-b are plane views of the male 10 and female 16 connection portions for providing a clearer view of some of the features described above in connection with fig 2.

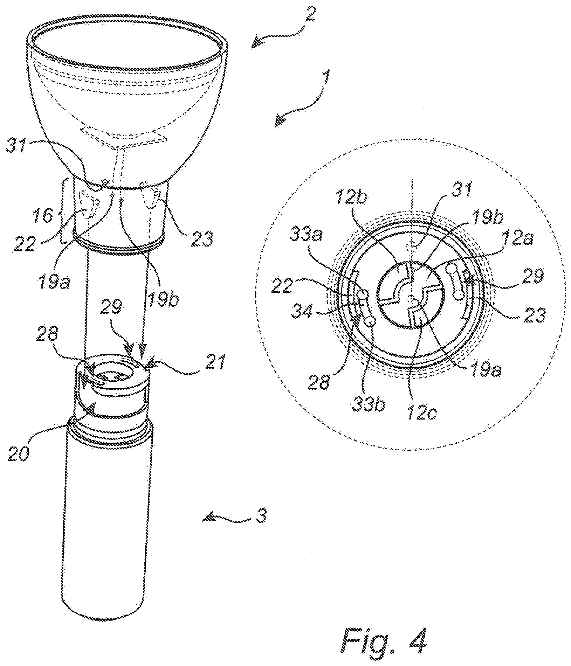

Assembly and operation of the lamp 1 in fig 2 will now be described with reference to figs 4-6 showing different rotational positions of the battery module 3 in relation to the lamp module 2. To avoid cluttering the drawings, only selected features are shown and/or indicated with reference numerals. Furthermore, each of figs 4-6 includes a perspective view of the lamp 1 and a top view in which the lamp module 2 has been made transparent and outlines of the lamp module 2 are shown as dashed lines to indicate relative rotational positions of features of the male connection portion 10 in relation to corresponding features of the female connection portion 16.

Referring first to fig 4, the lamp 1 is shown in one of the two rotational positions allowing axial insertion of the male connection portion 10 into the female connection portion 16. From the rotational position in fig 4, the battery module 3 and the lamp module 2 can be mechanically attached to each other by rotating the lamp module 2 and the battery module 3 in relation to each other.

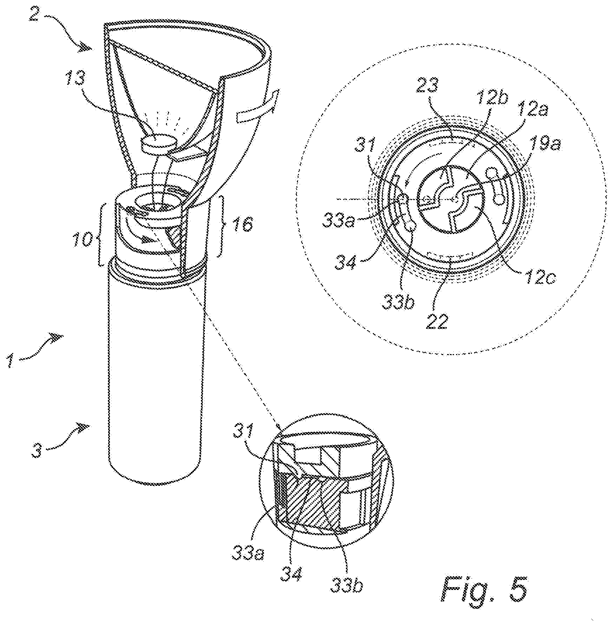

In fig 5, the lamp module 2 has been rotated counter clock-wise in relation to the battery module 3 until the axial protrusion 31 of the female connection portion 16 springs into the first axial recess 33a of the first recess arrangement 28 of the male connection portion 10. To a user, this is perceived as a distinct stop in the rotation, and defines a first rotational position in which the first connector pin 19a is connected to the first electrode surface 12a, and the second connector pin 19b is connected to the second electrode surface 12b. In this first rotational position, the light-source 13 is provided with electrical energy from the battery and lights up.

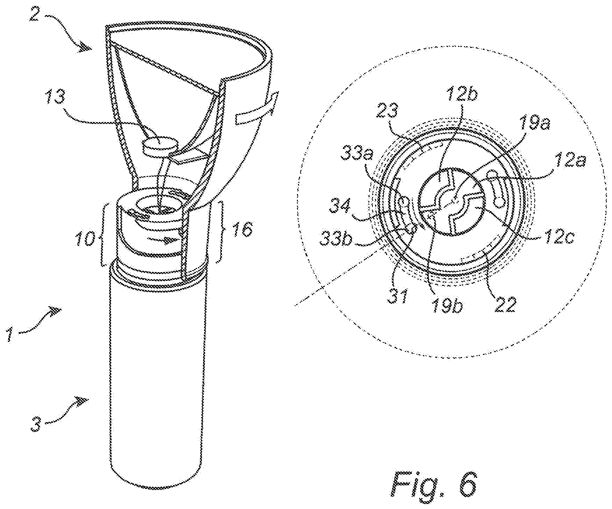

In fig 6, the lamp module 2 has been rotated further counter clock-wise in relation to the battery module 3 until the axial protrusion 31 of the female connection portion 16 springs into the second axial recess 33b of the first recess arrangement 28 of the male connection portion 10. To a user, this is perceived as a distinct stop in the rotation, and defines a second rotational position in which both the first connector pin 19a and the second connector pin 19b are connected to the first electrode surface 12a. In this first rotational position, the light-source 13 is not provided with electrical energy from the battery and the lamp 1 is thus switched off.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A functional electrical device (1; 5) comprising:
an energy storage module (3) including an energy storage device for storing electrical energy, and a male connection portion (10), said male connection portion comprising a first electrical connector (11) being electrically connected to said energy storage device to allow flow of electrical current from or to the energy storage device via the first electrical connector; and
a function-providing module (2; 6) including circuitry for providing an electrical function, and a female connection portion (16) for releasable mechanical and electrical connection to the male connection portion (10) of said energy storage module (3), said female connection portion (16) comprising a second electrical connector (17) being electrically connected to said circuitry to allow flow of electrical current to or from said circuitry via the second electrical connector,
wherein the male connection portion (10) of said energy storage module and the female connection portion (16) of said function-providing module are configured to allow the female connection portion (16) to axially receive the male connection portion (10) and to lock the male connection portion (10) and the female connection (16) portion together through rotation of the energy storage module (3) in relation to the function-providing module (2; 6);
wherein one of the male connection portion (10) and the female connection portion (16) comprises at least one protrusion (31) and the other one of the male connection portion and the female connection portion comprises at least one recess (33a-b) for cooperating with said at least one protrusion to define a first rotational position of the energy storage module in relation to the function-providing module and a second rotational position different from the first rotational position;
wherein one of said first electrical connector (11) comprised in the male connection portion and said second electrical connector (17) comprised in the female connection portion comprises a planar conductor pattern formed by at least a first electrode surface (12b) and a second electrode surface (12a) electrically separated from the first electrode surface, and the other one of said first electrical connector and said second electrical connector comprises a first (19b) and a second (19a) spring-loaded connector pin; and
wherein the male connection portion (10) and the female connection portion (16) are further configured in such a way that:
in said first rotational position, axial separation of said energy storage module (3) from said function-providing module (2; 6) is prevented, said first connector pin (19b) is in electrical connection with said first electrode surface (12b), and said second connector pin (19a) is in electrical connection with said second electrode surface (12a); and
in said second rotational position, axial separation of said energy storage module (3) from said function-providing module (2; 6) is prevented, and at least said first connector pin (19b) is electrically disconnected from said first electrode surface (12b).

2. The functional electrical device (1; 5) according to claim 1, wherein one of the male connection portion (10) and the female connection portion (16) comprises at least one protrusion (31) and the other one of the male connection portion and the female connection portion comprises a first recess (33a) for cooperating with said at least one protrusion (31) to define said first rotational position and a second recess (33b) for cooperating with said at least one protrusion (31) to define said second rotational position.

3. The functional electrical device (1; 5) according to claim 2, further comprising a recessed guiding track (34) connecting said first recess (33a) and said second recess (33b) for facilitating movement between said first and second rotational positions.

4. The functional electrical device (1; 5) according to claim 3, wherein a maximum depth of each of said first and second recesses (33a-b) is greater than a maximum depth of said recessed guiding track (34).

5. The functional electrical device (1; 5) according to any one of the preceding claims, wherein said male connection portion (10) is substantially cylindrical.

6. The functional electrical device (1; 5) according to any one of the preceding claims, wherein one of the male connection portion (10) and the female connection portion (16) comprises at least a first peripheral protrusion (22, 23) and the other one of the male connection portion and the female connection portion comprises at least a first guiding track (20, 21) for accommodating said first peripheral protrusion and defining a possible relative movement between the male connection portion and the female connection portion, at least comprising rotation around a rotational axis (18) for locking the male connection portion (10) and the female connection portion (16) together.

7. The functional electrical device (1; 5) according to claim 6, wherein said first peripheral protrusion (22, 23) is shaped as a triangle with one altitude of said triangle being substantially parallel with said rotational axis (18).

8. The functional electrical device (1; 5) according to claim 6 or 7, wherein said first guiding track (20, 21) comprises a first portion (25) oriented in parallel with said rotational axis (18), and a second portion (26) oriented perpendicular to said rotational axis (18).

9. The functional electrical device (1; 5) according to claim 8, wherein the first portion (25) of said first guiding track exhibits a decreasing width towards the second portion (26) of said first guiding track, to provide for a facilitated mating of said male connection portion and said female connection portion, and to guide said first peripheral protrusion towards the second portion.

10. The functional electrical device (1; 5) according to any one of claims 6 to 9, wherein one of the male connection portion and the female connection portion comprises a second peripheral protrusion (23) opposite said first peripheral protrusion (22) in relation to said rotational axis, and the other one of the male connection portion and the female connection portion comprises a second guiding track (21), opposite said first guiding track (20) in relation to said rotational axis, for accommodating said second peripheral protrusion.

11. The functional electrical device (1; 5) according to any one of the preceding claims, wherein said male connection portion (10) comprises said protrusion (31), and said female connection portion (16) comprises a first recess (33a) for cooperating with said protrusion to define said first rotational position and a second recess (33b) for cooperating with said protrusion to define said second rotational position.

12. The functional electrical device (1; 5) according to any one of the preceding claims, wherein said first electrical connector (11) comprised in the male connection portion comprises said planar conductor pattern (12a-c), and said second electrical connector (17) comprised in the female connection portion comprises said first and second spring loaded pins (19a-b).

13. The functional electrical device (1; 5) according to any one of the preceding claims, wherein said planar conductor pattern is recessed.

14. The functional electrical device (1) according to any one of the preceding claims, wherein said function-providing module comprises at least one solid state light-source (13).

## Patentansprüche

1. Elektrische Funktionsvorrichtung (1; 5), umfassend:
ein Energiespeichermodul (3) mit einer Energiespeichervorrichtung zum Speichern von elektrischer Energie und einem Steckerabschnitt (10), wobei der Steckerabschnitt einen ersten elektrischen Anschluss (11) umfasst, der elektrisch mit der Energiespeichervorrichtung verbunden ist, um einen Stromfluss von oder zu der Energiespeichervorrichtung über den ersten elektrischen Anschluss zu ermöglichen; und
ein Funktionsbereitstellungsmodul (2; 6) mit einer Schaltung zum Bereitstellen einer elektrischen Funktion und einem Buchsenabschnitt (16) zur lösbaren mechanischen und elektrischen Verbindung mit dem Steckerabschnitt (10) des Energiespeichermoduls (3), wobei der Buchsenabschnitt (16) einen zweiten elektrischen Anschluss (17) umfasst, der elektrisch mit der Schaltung verbunden ist, um einen Stromfluss zu oder von der Schaltung über den zweiten elektrischen Anschluss zu ermöglichen,
Wobei der Steckerabschnitt (10) des Energiespeichermoduls und der Buchsenabschnitt (16) des Funktionsbereitstellungsmoduls dafür ausgelegt sind, dem Buchsenabschnitt (16) eine axiale Aufnahme des Steckerabschnitts (10), sowie ein Miteinanderverbinden des Steckerabschnitts (10) und des Buchsenabschnitts (16) durch Drehung des Energiespeichermoduls (3) in Bezug auf das Funktionsbereitstellungsmodul (2; 6) zu ermöglichen;
wobei einer von dem Steckerabschnitt (10) und dem Buchsenabschnitt (16) mindestens einen Vorsprung (31) umfasst und der andere von dem Steckerabschnitt und dem Buchsenabschnitt mindestens eine Ausnehmung (33a-b) zum Zusammenwirken mit dem mindestens einen Vorsprung umfasst, um eine erste Drehposition des Energiespeichermoduls in Bezug auf das Funktionsbereitstellungsmodul und eine zweite Drehposition, die sich von der ersten Drehposition unterscheidet, zu definieren;
wobei einer von dem ersten elektrischen Anschluss (11), der im Steckerabschnitt umfasst ist, und dem zweiten elektrischen Anschluss (17), der im Buchsenabschnitt umfasst ist, eine flache Leiterstruktur umfasst, die durch mindestens eine erste Elektrodenoberfläche (12b) und eine zweite Elektrodenoberfläche (12a), die elektrisch von der ersten Elektrodenoberfläche getrennt ist, gebildet wird, und der andere von dem ersten elektrischen Anschluss und dem zweiten elektrischen Anschluss einen ersten (19b) und einen zweiten (19a) federbelasteten Anschlussstift umfasst; und
wobei der Steckerabschnitt (10) und der Buchsenabschnitt (16) ferner derart ausgelegt sind,
dass:
in der ersten Drehposition eine axiale Trennung des Energiespeichermoduls (3) von dem Funktionsbereitstellungsmodul (2; 6) verhindert wird, der erste Anschlussstift (19b) in elektrischer Verbindung mit der ersten Elektrodenoberfläche (12b) steht und der zweite Anschlussstift (19a) in elektrischer Verbindung mit der zweiten Elektrodenoberfläche (12a) steht; und
in der zweiten Drehposition eine axiale Trennung des Energiespeichermoduls (3) von dem Funktionsbereitstellungsmodul (2; 6) verhindert wird und zumindest der erste Verbindungsstift (19b) elektrisch von der ersten Elektrodenoberfläche (12b) getrennt ist.

2. Elektrische Funktionsvorrichtung (1; 5) nach Anspruch 1, wobei einer von dem Steckerabschnitt (10) und dem Buchsenabschnitt (16) mindestens einen Vorsprung (31) umfasst und der andere von dem Steckerabschnitt und dem Buchsenabschnitt mindestens eine erste Ausnehmung (33a) zum Zusammenwirken mit dem mindestens einen Vorsprung (31), um die erste Drehposition zu definieren, und eine zweite Ausnehmung (33b) zum Zusammenwirken mit dem mindestens einen Vorsprung (31), um die zweite Drehposition zu definieren, umfasst.

3. Elektrische Funktionsvorrichtung (1; 5) nach Anspruch 2, ferner umfassend eine vertiefte Führungsschiene (34), die die erste Ausnehmung (33a) und die zweite Aussparung (33b) verbindet, um eine Bewegung zwischen der ersten und der zweiten Drehposition zu ermöglichen.

4. Elektrische Funktionsvorrichtung (1; 5) nach Anspruch 3, wobei eine maximale Tiefe von jeder der ersten und der zweiten Aussparung (33a-b) größer ist als eine maximale Tiefe der vertieften Führungsschiene (34) .

5. Elektrische Funktionsvorrichtung (1; 5) nach einem der vorhergehenden Ansprüche, wobei der Steckerabschnitt (10) im Wesentlichen zylindrisch ist.

6. Elektrische Funktionsvorrichtung (1; 5) nach einem der vorhergehenden Ansprüche, wobei einer von dem Steckerabschnitt (10) und dem Buchsenabschnitt (16) mindestens einen ersten umlaufenden Vorsprung (22, 23) umfasst und der andere von dem Steckerabschnitt und dem Buchsenabschnitt mindestens eine erste Führungsschiene (20, 21) zum Aufnehmen des ersten umlaufenden Vorsprungs und zum Definieren einer möglichen Relativbewegung zwischen dem Steckerabschnitt und dem Buchsenabschnitt, die mindestens eine Drehung um eine Drehachse (18) zum Miteinanderverbinden des Steckerabschnitts (10) und des Buchsenabschnitts (16) umfasst, umfasst.

7. Elektrische Funktionsvorrichtung (1; 5) nach Anspruch 6, wobei der erste umlaufende Vorsprung (22, 23) als Dreieck geformt ist, wobei eine Höhe des Dreiecks im Wesentlichen parallel zur Drehachse (18) ist.

8. Funktionelle elektrische Vorrichtung (1; 5) nach Anspruch 6 oder 7, wobei die erste Führungsschiene (20, 21) einen ersten Abschnitt (25), der parallel zur Drehachse (18) ausgerichtet ist, und einen zweiten Abschnitt (26), der senkrecht zur Drehachse (18) ausgerichtet ist, umfasst.

9. Elektrische Funktionsvorrichtung (1; 5) nach Anspruch 8, wobei der erste Abschnitt (25) der ersten Führungsschiene eine abnehmende Breite in Richtung des zweiten Abschnitts (26) der ersten Führungsschiene aufweist, um ein erleichtertes Zusammenfügen des Steckerabschnitts und des Buchsenabschnitts zu ermöglichen und den ersten umlaufenden Vorsprung in Richtung des zweiten Abschnitts zu führen.

10. Elektrische Funktionsvorrichtung (1; 5) nach einem der Ansprüche 6 bis 9, wobei einer von dem Steckerabschnitt und dem Buchsenabschnitt einen zweiten umlaufenden Vorsprung (23), der dem ersten umlaufenden Vorsprung (22) in Bezug auf die erste Drehachse gegenüberliegt, umfasst und der andere von dem Steckerabschnitt und dem Buchsenabschnitt eine zweite Führungsschiene (21), die der ersten Führungsschiene (20) in Bezug auf die Drehachse gegenüberliegt, zum Aufnehmen des zweiten umlaufenden Vorsprungs umfasst.

11. Elektrische Funktionsvorrichtung (1; 5) nach einem der vorhergehenden Ansprüche, wobei der Steckerabschnitt (10) den Vorsprung (31) umfasst und der Buchsenabschnitt (16) eine erste Ausnehmung (33a) zum Zusammenwirken mit dem Vorsprung, um die erste Drehposition zu definieren, und eine zweite Ausnehmung (33b) zum Zusammenwirken mit dem Vorsprung, um die zweite Drehposition zu definieren, umfasst.

12. Elektrische Funktionsvorrichtung (1; 5) nach einem der vorhergehenden Ansprüche, wobei der erste elektrische Anschluss (11), der in dem Steckerabschnitt umfasst ist, die flache Leiterstruktur (12a-c) umfasst und der zweite elektrische Anschluss (17), der in dem Buchsenabschnitt umfasst ist, den ersten und den zweiten federbelasteten Stift (19a-b) umfasst.

13. Elektrische Funktionsvorrichtung (1; 5) nach einem der vorhergehenden Ansprüche, wobei die flache Leiterstruktur vertieft ist.

14. Elektrische Funktionsvorrichtung (1) nach einem der vorhergehenden Ansprüche, wobei das Funktionsbereitstellungsmodul mindestens eine Festkörperlichtquelle (13) umfasst.

## Revendications

1. Dispositif électrique fonctionnel (1 ;5) comprenant :
un module de stockage d'énergie (3) incluant un dispositif de stockage énergie pour stocker de l'énergie électrique, et une portion de connecteur mâle (10), ladite portion de connecteur mâle comprenant un premier connecteur électrique (11) pour permettre à un courant électrique de circuler à partir de ou vers le dispositif de stockage d'énergie via le premier connecteur électrique ; et
un module fournissant une fonctionnalité (2 ;6) incluant des circuits pour fournir une fonctionnalité électrique, et une portion de connecteur femelle (16) en vue de la connexion électrique et mécanique réversible à la portion de connecteur mâle (10) dudit module de stockage d'énergie (3), ladite portion de connecteur femelle (16) comprenant un second connecteur électrique (17) étant connecté électriquement auxdits circuits afin de permettre à un courant électrique de circuler à partir de ou vers lesdits circuits via le second connecteur électrique,
dans lequel la portion de connecteur mâle (10) dudit module de stockage d'énergie et la portion de connecteur femelle (16) dudit module fournissant une fonctionnalité sont configurées pour permettre à la portion de connecteur femelle (16) de recevoir axialement la portion de connecteur mâle (10) et de verrouiller la portion de connecteur mâle (10) et la portion de connecteur femelle (16) conjointement par l'intermédiaire de la rotation du module de stockage d'énergie (3) par rapport au module fournissant une fonctionnalité (2 ;6) ;
dans lequel une de la portion de connecteur mâle (10) et la portion de connecteur femelle (16) comprend au moins une protubérance (31) et l'autre de la portion de connecteur mâle et la portion de connecteur femelle comprend au moins un évidement (33a-b) en vue de la coopération avec ladite au moins une protubérance afin de définir une première position de rotation du module de stockage d'énergie par rapport au module fournissant une fonctionnalité et une seconde position de rotation différente de la première position de rotation ;
dans lequel un dudit premier connecteur électrique (11) compris dans la portion de connecteur mâle et dudit second connecteur électrique (17) compris dans la portion de connecteur femelle comprend un motif conducteur planaire formé par au moins une première surface d'électrode (12b) et une seconde surface d'électrode (12a) séparée électriquement de la première surface d'électrode, et l'autre desdits premier connecteur électriques et second connecteur électrique comprend une première (19b) et une seconde (19a) broche de connecteur à ressort ; et
dans lequel la portion de connecteur mâle (10) et la portion de connecteur femelle (16) sont en outre configurées d'une manière telle que :
dans ladite première position de rotation, une rotation axiale dudit module de stockage d'énergie (3) à partir du dit module fournissant une fonctionnalité (2 ;6) est empêchée, ladite première broche de connecteur (19b) étant en connexion électrique avec ladite première surface d'électrode (12b) et ladite seconde broche de connecteur (19a) étant en connexion électrique avec ladite seconde surface d'électrode (12a) ; et
dans ladite seconde position de rotation, une séparation axiale dudit module de stockage d'énergie (3) dudit module fournissant une fonctionnalité (2 ;6) est empêchée et au moins ladite première broche de connecteur (19b) est déconnectée électriquement de ladite première surface d'électrode (12b).

2. Dispositif électrique fonctionnel (1 ;5) selon la revendication 1, dans lequel une de la portion de connecteur mâle (10) et la portion de connecteur femelle (16) comprend au moins une protubérance (31) et l'autre de la portion de connecteur mâle et la portion de connecteur femelle comprend un premier évidement (33a) pour coopérer avec ladite au moins une protubérance (31) afin de définir ladite première position de rotation et un second évidement (33b) pour coopérer avec ladite au moins une protubérance (31) afin de définir ladite seconde position de rotation.

3. Dispositif électrique fonctionnel (1 ;5) selon la revendication 2, comprenant en outre une piste de guidage évidée (34) raccordant ledit premier évidement (33a) et ledit second évidement (33b) afin de faciliter un mouvement entre ladite première et ladite seconde position de rotation.

4. Dispositif électrique fonctionnel (1 ;5) selon la revendication 3, dans lequel une profondeur maximale de chacun desdits premiers et seconds évidements (33a-b) est supérieure à une profondeur maximale de ladite piste de guidage évidée (34).

5. Dispositif électrique fonctionnel (1 ;5) selon une quelconque des revendications précédentes, dans lequel ladite portion de connecteur mâle (10) est substantiellement cylindrique.

6. Dispositif électrique fonctionnel (1 ;5) selon une quelconque des revendications précédentes, dans lequel une de la portion de connecteur mâle (10) et la portion de connecteur femelle (16) comprend au moins une première protubérance périphérique (22,23) et l'autre de la portion de connecteur mâle et la portion de connecteur femelle comprend au moins une première piste de guidage (20,21) pour renfermer ladite première protubérance périphérique et définir un éventuel mouvement relatif entre la portion de connecteur mâle et la portion de connecteur femelle, comprenant au moins une rotation autour d'un axe de rotation (18) pour verrouiller la portion de connecteur mâle (10) et la portion de connecteur femelle (16) conjointement.

7. Dispositif électrique fonctionnel (1 ;5) selon la revendication 6, dans lequel ladite première protubérance périphérique (22,23) est façonnée comme un triangle avec une altitude dudit triangle étant substantiellement parallèle audit axe de rotation (18) .

8. Dispositif électrique fonctionnel (1 ;5) selon la revendication 6 ou 7, dans lequel ladite première piste de guidage (20,21) comprend une première portion (25) orientée en parallèle audit axe de rotation (18) et une seconde portion (26) orientée perpendiculairement audit axe de rotation (18).

9. Dispositif électrique fonctionnel (1 ;5) selon la revendication 8, dans lequel la première portion (25) de ladite première piste de guidage présente une largeur décroissante dans la direction de la seconde portion (26) de ladite première piste de guidage, afin de fournir un emboîtement facilité de ladite portion de connecteur mâle et ladite portion de connecteur femelle, et guider ladite première protubérance périphérique dans la direction de la seconde portion.

10. Dispositif électrique fonctionnel (1 ;5) selon la revendication 6 ou 9, dans lequel une de la portion de connecteur mâle et la portion de connecteur femelle comprend une seconde protubérance périphérique (23) opposée à ladite première protubérance périphérique (22) en relation avec ledit axe de rotation, et l'autre de la portion de connecteur mâle et la portion de connecteur femelle comprend une seconde piste de guidage (21), opposée à ladite première piste de guidage (20) en relation avec ledit axe de rotation, pour renfermer ladite seconde protubérance périphérique.

11. Dispositif électrique fonctionnel (1 ;5) selon une quelconque des revendications précédentes, dans lequel ladite portion de connecteur mâle (10) comprend ladite protubérance (31), et ladite portion de connecteur femelle (16) comprend un premier évidement (33a) pour coopérer avec ladite protubérance afin de définir ladite première position de rotation et un second évidement (33b) pour coopérer avec ladite protubérance afin de définir ladite seconde position de rotation.

12. Dispositif électrique fonctionnel (1 ;5) selon une quelconque des revendications précédentes, dans lequel ledit premier connecteur électrique (11) compris dans la portion de connecteur mâle comprend ledit motif conducteur planaire (12a-c), et ledit second connecteur électrique (17) compris dans la portion de connecteur femelle comprend lesdites première et seconde broches à ressort (19a-b).

13. Dispositif électrique fonctionnel (1 ;5) selon une quelconque des revendications précédentes, dans lequel ledit motif conducteur planaire est évidé.

14. Dispositif électrique fonctionnel (1 ;5) selon une quelconque des revendications précédentes, dans lequel ledit module fournissant une fonctionnalité comprend au moins une source lumineuse à semi-conducteurs (13).
